# EUROPÄISCHE PATENTSCHRIFT

(11) **EP 1 468 850 B1**
(45) Veröffentlichungstag und Bekanntmachung des Hinweises auf die Patenterteilung: **30.04.2008**
(21) Anmeldenummer: 04008317.2
(22) Anmeldetag: 06.04.2004
(51) Int. Cl.: B60H 1/00

(54) **Modular aufgebaute Heizungs- oder Klimaanlage**
Modular heating or air conditioning device
Dispositif de chauffage ou de climatisation modulaire

(30) Priorität: 16.04.2003 DE 10317784
(43) Veröffentlichungstag der Anmeldung: 20.10.2004
(73) Patentinhaber: Behr GmbH & Co. KG, 70469 Stuttgart (DE)
(72) Erfinder: Dieksander, Wolfgang, 70794 Filderstadt (DE); Radressa, Genis, 70469 Stuttgart (DE); Schall, Matthias, Dr., 70619 Stuttgart (DE)
(74) Vertreter: Grauel, Andreas

(56) Entgegenhaltungen:
- EP-A- 0 663 309
- DE-A- 10 121 286
- DE-A- 19 822 173
- FR-A- 2 798 095

## Beschreibung

Die Erfindung betrifft eine Heizungs-, Belüftungs- oder Klimaanlage, insbesondere für ein Kraftfahrzeug, gemäß dem Oberbegriff des Anspruchs 1.

Bei Niederverbrauchsfahrzeugen ist auf Grund des geringen Abwärmeangebots des Motors eine zusätzliche Heizleistung zur Erwärmung des Fahrgastraums sowie zur schnellen Beseitigung eines Beschlags (Eis oder Wasser) insbesondere an der Windschutzscheibe erforderlich. Dazu können in Strömungsrichtung der Luft gesehen nach einem vom Kühlwasser des Fahrzeugmotors durchströmten Wärmetauscher angeordnete Zusatzheizer, zum Beispiel PTC-Heizelemente oder andere, nicht vom Kühlwasser durchströmte Wärmetauscher, wie zum Beispiel ein Zusatz-Wärmetauscher einer CO2-Wärmepumpe, verwendet werden, die etwas beabstandet vom Wärmetauscher im Warmluftkanal angeordnet sind.

Aus der FR 2 798 095 ist als nächster Stand der Technik eine Heizungs- und/oder Klimaanlage für ein Kraftfahrzeug bekannt, welche einen ersten Heizkörper und einen Zusatzheizkörper aufweist, wobei der Zuatzheizkörper in einem Gehäuseteil angeordnet ist, welches vom Hauptgehäuse isolierbar ist, um eine Variante mit und eine Variante ohne Zusatzheizung zu bilden.

Die strömungstechnische Auslegung der Heizungs-, Belüftungs- oder Klimaanlage, im folgenden zusammenfassend als Klimaanlage bezeichnet, einschließlich des Wärmetauscher und des Zusatzheizers ist jedoch recht aufwändig, da im allgemeinen jedes Heizungs- oder Klimaanlagensystem neu ausgelegt werden muss, einmal unter Berücksichtigung des Zusatzheizers und einmal ohne diesen.

Auch kann es nachteilig sein, daß die Luft innerhalb der Klimaanlage eine Vorzugsrichtung in einem Kanal hat und davon abweichend ausgerichtete Kanäle werden nur schwach an- bzw. durchströmt.

Es ist Aufgabe der Erfindung, eine kostengünstige, allgemein verwendbare Heizungs- oder Klimaanlage zur Verfügung zu stellen, die bezüglich der obigen Nachteile zumindest teilweise verbessert sind.

Diese Aufgabe wird gelöst durch eine Heizungs- oder Klimaanlage mit den Merkmalen des Anspruchs 1.

Erfindungsgemäß ist eine Heizungs- oder Klimaanlage, insbesondere für eine Kraftfahrzeug, vorgesehen, die - anstelle eines Zusatzheizers - ein nicht beheizbares Ersatzelement aufweist, das im Wesentlichen oder bevorzugt exakt die geometrische Gestalt des Zusatzheizers hat. Dabei kann bei der teueren Ausführungsform der Zusatzheizer und bei der billigeren Ausführungsform das Ersatzelement auch etwas beabstandet vom systemübergreifend verwendeten Wärmetauscher angeordnet sein. Ein derartiges Ersatzelement ermöglicht die Verwendung eines strömungstechnisch optimal ausgelegten Wärmetauschers und somit der gesamten Klimaanlage auch in preisgünstigeren Fahrzeugen, ohne dass konstruktive Änderungen an der Heizungs- oder Klimaanlage oder dem entsprechenden Bauraum erforderlich sind. Ferner wird das Schichtungs- und Regelungsverhalten der Heizungs- oder Klimaanlage nicht oder nur unwesentlich geändert. Durch die Stückzahlerhöhung in Folge der gleichen Gehäuseteile können die Produktionskosten deutlich gesenkt werden. Ferner wird der Abstimmungsaufwand für verschiedene Ausgestaltungen (z.B. mit Zusatzheizer und ohne dasselbe) deutlich verringert, wodurch unter anderem auch die Entwicklungszeiten verkürzt und die Entwicklungskosten gesenkt werden können.

Als Ersatzelement für den Zusatzheizer ist ein Leitgitter mit verschieden profilierten und angestellten Schaufeln vorgesehen. Diese sind vorzugsweise in horizontaler und vertikaler Richtung angeordnet. Der horizontale und vertikale Abstand der Schaufeln, ihre Anzahl sowie die geometrische Gestaltung der einzelnen Schaufeln sind projektspezifisch und für jedes System neu festzulegen.

Das Ersatzelement besteht vorzugsweise aus Kunststoff. Dies ermöglicht eine kostengünstige Herstellung.

Vorzugsweise ist das Ersatzelement mit einer Abdeckung für einen Schacht für den zu ersetzenden Zusatzheizer ausgebildet, so dass durch die Montage des Ersatzelements keine zusätzlichen Montagekosten anfallen.

Weiterhin wird die Aufgabe gelöst durch ein Ersatzelement mit den Merkmalen des Anspruchs 8 bei einer Heizungs- oder Klimaanlage, insbesondere für ein Kraftfahrzeug, mit einer Aufnahme- oder Anbringmöglichkeit an einem Wärmetauscher der Heizungs- oder Klimaanlage und/oder benachbart zum Wärmetauscher der Heizungs- oder Klimaanlage und/oder in einem Kanal der Anlage für ein nicht beheizbares Luftleitelement.

Das Luftleitelement ist durch ein Leitgitter gebildet, wobei das Leitgitter profilierte und angestellte Leitschaufeln aufweist. Bei unterschiedlichen Ausführungsbeispielen kann es vorteilhaft sein, wenn die Leitschaufeln in horizontaler und/oder vertikaler Richtung angeordnet sind.

Besonders vorteilhaft ist es, wenn das Luftleitelement aus Kunststoff besteht.

Besonders vorteilhaft ist es, wenn das Luftleitelement in Luftströmungsrichtung gesehen nach dem Wärmetauscher in einem Warmluftkanal angeordnet ist.

Auch kann es vorteilhaft sein, wenn das Luftleitelement mit einer Abdeckung für einen Schacht für das Heizelement ausgebildet ist.

Die erfindungsgemäße Aufgabe wird weiterhin gelöst mit einem Baukasten einer Heizungs- oder Klimaanlage, insbesondere für ein Kraftfahrzeug, mit einer Aufnahme- oder Anbringmöglichkeit an einem Wärmetauscher der Heizungs- oder Klimaanlage, daß benachbart zum Wärmetauscher der Heizungs- oder Klimaanlage und/oder in einem Kanal der Anlage für ein nicht beheizbares Luftleitelement oder Luftführungselement angeordnet ist.

Erfindungsgemäß ist das Luftleitelement durch ein Leitgitter gebildet, wobei das Leitgitter profilierte und angestellte Leitschaufeln aufweist. Bei einer Weiterbildung kann es zweckmäßig sein, wenn die Leitschaufeln in horizontaler und vertikaler Richtung angeordnet sind. Die Leitschaufeln wären vorteilhaft in Luftanströmungsrichtung betrachtet gekrümmt ausgebildet, so daß sie eine Umlenkung des Luftstroms zumindest teilweise bewirken können.

Vorteilhaft ist es, wenn das Leitgitter von einem Rahmen oder zumindest zwei benachbarten Schienen umfaßt ist, welcher bzw. welche in eine Aufnahme in einem Gehäuse einer Klimaanlage aufnehmbar ausgebildet ist. Die Leitschaufeln wären dann vorzugsweise zumindest teilweise zwischen den Schienen oder innerhalb des Rahmens angeordnet.

Vorteilhaft ist, wenn das Luftleitelement aus Kunststoff besteht.

Besonders vorteilhaft ist es, wenn das Luftleitelement in Luftströmungsrichtung gesehen nach dem Wärmetauscher, wie Verdampfer oder Heizkörper oder Zusatzheizer, in einem Warmluftkanal und/oder einem Kaltluftkanal angeordnet ist.

Besonders vorteilhaft ist es, wenn das Luftleitelement mit einer Abdeckung für einen Schacht für das Heizelement ausgebildet ist.

Im Folgenden wird die Erfindung anhand von Ausführungsbeispielen im Einzelnen erläutert. Dabei zeigt:
- Figur 1: eine Klimaanlage im Schnitt,
- Figur 2: eine Ersatz- oder Luftleitelement und
- Figur 3: eine Ersatz- oder Luftleitelement.

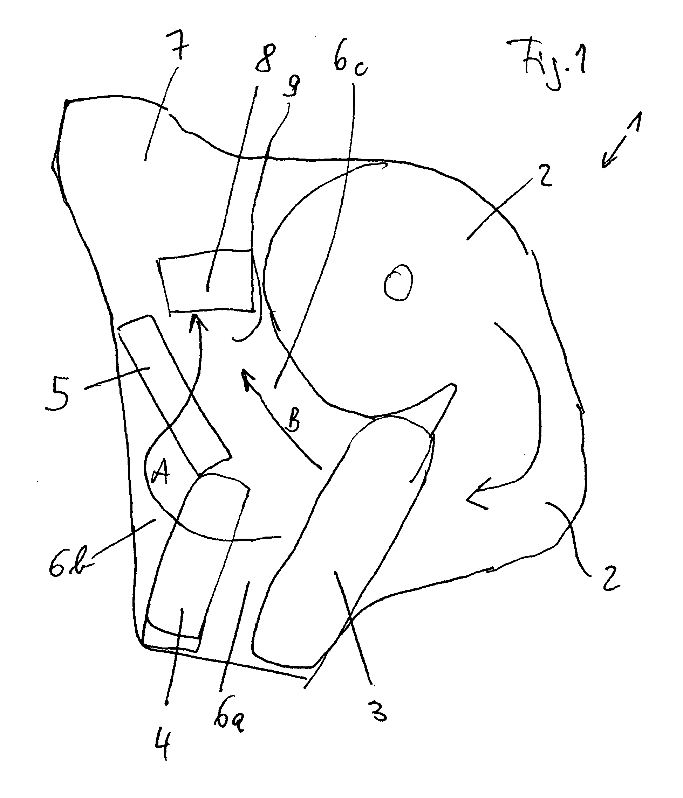

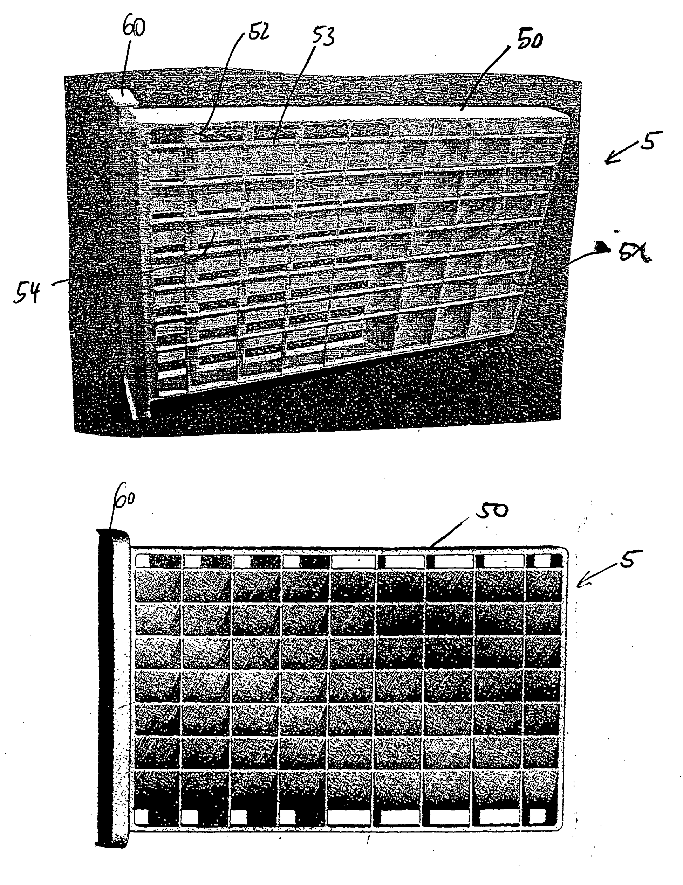

Gemäß einem Ausführungsbeispiel zeigt Figur 1 eine Heizungs- oder Klimaanlage 1 mit einem Gebläse 2 und einem dem Gebläse nachgeschalteten Kanal, durch den Luft von dem Gebläse 1 einem Verdampfer 3 zugeführt wird. Die Luft tritt durch den Verdampfer und kann nach dem Verdampfer 3 mittels einer nicht dargestellten Mischklappe aufgeteilt werden auf einen Kaltluftkanal 6c und/oder einen Warmluftkanal 6a,6b.

Die Luft, die durch den Warmluftkanal 6a,6b strömt (Pfeil A), durchströmt einen Heizkörper 4 und anschließend einen Zusatzheizkörper 5 oder durch ein Ersatzelement oder Luftleitelement.

Bei der teueren Variante einer Heizungs- oder Klimaanlage ist ein Wärmetauscher mit einem getrennt hiervon ausgebildeten Zusatzheizer, im Folgenden als Heizelement bezeichnet, vorgesehen, der z.B. durch einen Zusatz-wärmetauscher einer CO2-Wärmepumpe, ein PTC Element oder ein anderes Heizelement gebildet wird. Das Heizelement ist im Warmluftkanal 6a,6b in Luftströmungsrichtung gesehen nach dem Wärmetauscher 4 angeordnet.

Gemäß einer anderen Ausführung kann das Luftleitelement auch in einem Kaltluftkanal (Pfeil B) angeordnet sein, was jedoch in Figur 1 nicht dargestellt ist.

Bei der billigen Variante wird an Stelle des Heizelements ein Ersatzelement 5 vorgesehen, das im Wesentlichen die gleichen strömungstechnischen Eigenschaften aufweist, wie das Heizelement, wobei es sich vorliegend um ein Leitgitter mit verschieden profilierten und angestellten Schaufeln handelt.

Somit kann auch für die Variante ohne Zusatzheizer ein optimiertes Strömungsverhalten, das heißt Regelverhalten, Schichtung und Luftverteilung, erreicht werden, wobei die gleichen Gehäuseteile und sonstigen Einbauten verwendet werden, wie für die Variante mit Zusatzheizer.

Nach dem Element 5 wird die Luft in der Kammer 9 gegebenenfalls gemischt und verteilt und zu Auslässen 7 oder 8 geführt.

Die Figuren 2 und 3 zeigen ein Ersatzelement oder ein Luftleitelement, das statt eines Zusatzheizers in ein Gehäuse einer Klimaanlage eingesetzt werden kann. Auch kann ein solches Luftleitelement zur Luftverteilung in ein Gehäuse oder in einen Kanal einer Klimaanlage eingesetzt werden.

Das Element 5 der Figuren 2 und 3 weist einen Rahmen 50 auf, der in eine Aufnahme eines Gehäuses einsetzbar ist. Ist das Element 5 als Ersatzelement für einen nicht eingesetzten Zusatzheizer vorgesehen, ist es zweckmäßig, wenn das Element die gleichen äußeren Abmessungen wie das zu ersetzende Heizelement aufweist.

In den Figuren 2 und 3 ist zu erkennen, daß innerhalb des umlaufenden Rahmens 50 ein Leitgitter 51 mit senkrechten und waagrechten Stegen 52,53 gebildet ist. Das Leitgitter 51 weist dabei profilierte und angestellte Leitschaufeln 54 auf. Diese Leitschaufeln können dabei in horizontaler und/oder vertikaler Richtung angeordnet sein. Vorzugsweise ist das Ersatzelement aus Kunststoff hergestellt, wie durch ein Spritzgußverfahren.

Das Element weist einen Ansatz 60 auf, der an einer Seite des Elements angeordnet ist. Dieser Ansatz bildet eine Abdeckung für einen Schacht im Gehäuse der Klimaanlage, wenn das Element in die Anlage eingesetzt ist. Vorzugsweise weist der Ansatz einen umlaufenden Rand auf, an dem auch Dichtmittel vorgesehen sein können, um das Gehäuse abzudichten.

## Patentansprüche

1. Heizungs- oder Klimaanlage, insbesondere für ein Kraftfahrzeug, die eine Aufnahme- oder Befestigungsvorrichtung an einem Wärmetauscher und/oder benachbart zum Wärmetauscher und/oder in einem Kanal für ein zusätzliches Heizelement als Zusatzheizung, aufweist, wobei an Stelle des zusätzlichen Heizelements ein nicht beheizbares Ersatzelement (5) in die Aufnahme- oder Befestigungsvorrichtung eingesetzt ist, **dadurch gekennzeichnet, dass** das Ersatzelement (5) durch ein Leitgitter (51) mit profilierten und angestellten Leitschaufeln (54) gebildet ist.

2. Heizungs- oder Klimaanlage nach Anspruch 1, **dadurch gekennzeichnet, dass** das Ersatzelement (5) die gleichen äußeren Abmessungen wie das zu ersetzende Heizelement aufweist.

3. Heizungs- oder Klimaanlage nach einem der vorstehenden Ansprüche, **dadurch gekennzeichnet, dass** die Leitschaufeln (54) in horizontaler und/oder vertikaler Richtung angeordnet sind.

4. Heizungs- oder Klimaanlage nach einem der vorstehenden Ansprüche, **dadurch gekennzeichnet, dass** das Ersatzelement (5) aus Kunststoff besteht.

5. Heizungs- oder Klimaanlage nach einem der vorstehenden Ansprüche, **dadurch gekennzeichnet, dass** das Ersatzelement (5) die gleichen strömungstechnischen Eigenschaften wie das Heizelement aufweist, das es ersetzt.

6. Heizungs- oder Klimaanlage nach einem der vorstehenden Ansprüche, **dadurch gekennzeichnet, dass** das Ersatzelement (5) in Luftströmungsrichtung gesehen nach dem Wärmetauscher in einem Warmluftkanal angeordnet ist.

7. Heizungs- oder Klimaanlage nach einem der vorstehenden Ansprüche, **dadurch gekennzeichnet, dass** das Ersatzelement (5) mit einer Abdeckung (60) für einen Schacht für das Heizelement ausgebildet ist.

8. Nicht beheizbares Ersatzelement (5) für eine Heizungs- oder Klimaanlage, insbesondere für ein Kraftfahrzeug, die eine Aufnahme- oder Befestigungsvorrichtung an einem Wärmetauscher (4) und/oder benachbart zum Wärmetauscher und/oder in einem Kanal (6a, 6b) für ein zusätzliches Heizelement als Zusatzheizung aufweist, wobei das Ersatzelement (5) derart ausgebildet ist, dass es anstelle des zusätzlichen Heizelements in die Aufnahme- oder Befestigungsvorrichtung der Heizungs- oder Klimaanlage einsetzbar ist, **dadurch gekennzeichnet, dass** das Ersatzelement durch ein Leitgitter (51) mit profilierten und angestellten Leitschaufeln (54) gebildet ist.

9. Baukasten einer Heizungs- oder Klimaanlage bestehend aus einem Gehäuse einer Klimaanlage, einem Verdampfer (3), einem Heizkörper (4), einem zusätzlichen Heizelement als Zusatzheizung, einem als Leitgitter (51) mit profilierten und angestellten Leitschaufeln (54) ausgebildetem Ersatzelement (5) für das zusätzlichen Heizelement und einer Aufnahme oder Befestigungsvorrichtung für das Heizelement oder alternativ für das Ersatzelement, wobei in einer ersten Variante der Heizungs- oder Klimaanlage das Heizelement und in einer zweiten Variante das Ersatzelement in die Aufnahme- oder Befestigungsvorrichtung einsetzbar ist.

## Claims

1. A heating or air-conditioning device, in particular for a motor vehicle, which has on a heat exchanger and/or adjacent to the heat exchanger and/or in a channel a receiving or fixing device for an auxiliary heating element as an auxiliary heater, a non-heatable replacement element (5) being placed in the receiving or fixing device instead of the auxiliary heating element,
**characterised in that**
the replacement element (5) is formed by a guide baffle (51) with profiled and angled guide blades (54).

2. A heating or air-conditioning device in accordance with claim 1,
**characterised in that**
the replacement element (5) has the same external dimensions as the heating element to be replaced.

3. A heating or air-conditioning device in accordance with one of the preceding claims,
**characterised in that**
the guide blades (54) are positioned horizontally and/or vertically.

4. A heating or air-conditioning device in accordance with one of the preceding claims,
**characterised in that**
the replacement element (5) is made of plastic.

5. A heating or air-conditioning device in accordance with one of the preceding claims,
**characterised in that**
the replacement element (5) has the same fluid-mechanical properties as the heating element it replaces.

6. A heating or air-conditioning device in accordance with one of the preceding claims,
**characterised in that**
seen in the direction of the air flow the replacement element (5) is positioned in a warm air channel downstream of the heat exchanger.

7. A heating or air-conditioning device in accordance with one of the preceding claims,
**characterised in that**
the replacement element (5) is designed with a cover (60) for a shaft for the heating element.

8. A non-heatable replacement element (5) for a heating or air-conditioning device, in particular for a motor vehicle, which has a receiving or fixing device on a heat exchanger (4) and/or adjacent to the heat exchanger and/or in a channel (6a, 6b) for an auxiliary heating element as an auxiliary heater, the replacement element (5) being designed in such a manner that it can be placed in the receiving or fixing device of the heating or air-conditioning device instead of the auxiliary heating element,
**characterised in that**
the replacement element is formed by a guide baffle (51) with profiled and angled guide blades (54).

9. A module of a heating or air-conditioning device consisting of a housing of an air-conditioning device, an evaporator (3), a radiator (4), an auxiliary heating element as an auxiliary heater, a replacement element (5) designed as a guide baffle (51) with profiled and angled guide blades (54) for the auxiliary heating element and a receiving or fixing device for the heating element or alternatively for the replacement element, it being able to place the heating element in the receiving or fixing device in a first variant of the heating or air-conditioning device and to place the replacement element in the receiving or fixing device in a second first variant of the heating or air-conditioning device.

## Revendications

1. Système de chauffage ou de climatisation, en particulier pour un véhicule automobile, qui présente un dispositif de logement ou de fixation monté sur un échangeur de chaleur et / ou voisin de l'échangeur de chaleur et / ou placé dans un conduit prévu pour un élément chauffant supplémentaire servant de chauffage supplémentaire où, à la place de l'élément chauffant supplémentaire, un élément de remplacement non chauffant (5) est placé dans le dispositif de logement ou de fixation,
**caractérisé en ce que** l'élément de remplacement (5) est formé par une grille directrice (51) à palettes fixes (54) profilées et inclinées.

2. Système de chauffage ou de climatisation selon la revendication 1, **caractérisé en ce que** l'élément de remplacement (5) présente les mêmes dimensions extérieures que l'élément chauffant à remplacer.

3. Système de chauffage ou de climatisation selon l'une ou l'autre des revendications précédentes, **caractérisé en ce que** les palettes fixes (54) sont disposées dans le sens horizontal et / ou vertical.

4. Système de chauffage ou de climatisation selon l'une quelconque des revendications précédentes, **caractérisé en ce que** l'élément de remplacement (5) se compose de matière plastique.

5. Système de chauffage ou de climatisation selon l'une quelconque des revendications précédentes, **caractérisé en ce que** l'élément de remplacement (5) présente les mêmes propriétés techniques d'écoulement que l'élément chauffant qu'il remplace.

6. Système de chauffage ou de climatisation selon l'une quelconque des revendications précédentes, **caractérisé en ce que** l'élément de remplacement (5), en regardant dans la direction d'écoulement d'air, est disposé dans un conduit d'air chaud, en aval de l'échangeur de chaleur.

7. Système de chauffage ou de climatisation selon l'une quelconque des revendications précédentes, **caractérisé en ce que** l'élément de remplacement (5) est configuré en comportant un couvercle (60) pour une gaine prévue pour l'élément chauffant.

8. Elément de remplacement non chauffant (5) pour un système de chauffage ou de climatisation, en particulier pour un véhicule automobile, qui présente un dispositif de logement ou de fixation monté sur un échangeur de chaleur (4) et / ou voisin de l'échangeur de chaleur et / ou placé dans un conduit (6a, 6b) prévu pour un élément chauffant supplémentaire servant de chauffage supplémentaire, où l'élément de remplacement (5) est configuré de manière telle qu'à la place de l'élément chauffant supplémentaire, il puisse être placé dans le dispositif de logement ou de fixation du système de chauffage ou de climatisation,
**caractérisé en ce que** l'élément de remplacement est formé par une grille directrice (51) à palettes fixes (54) profilées et inclinées.

9. Ensemble modulaire d'un système de chauffage ou de climatisation se composant d'un boîtier d'un système de climatisation, d'un évaporateur (3), d'un radiateur (4), d'un élément chauffant supplémentaire servant de chauffage supplémentaire, d'un élément de remplacement (5) prévu pour l'élément chauffant supplémentaire et configuré comme une grille directrice (51) à palettes fixes (54) profilées et inclinées, et se composant d'un dispositif de logement ou de fixation prévu pour l'élément chauffant ou bien, en variante, pour l'élément de remplacement où, dans une première variante du système de chauffage ou de climatisation, l'élément chauffant peut être placé dans le dispositif de logement ou de fixation, l'élément de remplacement, dans une deuxième variante, pouvant être placé dans ce même dispositif de logement ou de fixation.
